# EUROPEAN PATENT SPECIFICATION

(11) **EP 2 661 956 B1**
(45) Date of publication and mention of the grant of the patent: **21.08.2019**
(21) Application number: 13166752.9
(22) Date of filing: 07.05.2013
(51) Int. Cl.: A01G 9/14

(54) **Greenhouse**
Gewächshaus
Serre

(30) Priority: 10.05.2012 NL 2008791
(43) Date of publication of application: 13.11.2013
(73) Proprietor: Excellent Glastuinbouwsystemen B.V., 2291 EE Wateringen (NL)
(72) Inventor: Arensman, Ronnie, 2681 TW Monster (NL)
(74) Representative: Hooiveld, Arjen Jan Winfried

(56) References cited:
- EP-A1- 1 915 900
- DE-A1- 3 939 015
- NL-A- 7 017 622
- US-A- 1 195 583
- US-A- 2 691 352

## Description

The invention relates to a (Dutch-type) greenhouse comprising at least one gutter section and a roof extending from said gutter section, wherein the roof comprises a ridge section as well as spaced-apart glazing bars which are connected to an edge of the gutter section near one end and to the ridge section near their other end, and wherein panes are provided between adjacent glazing bars, which panes are supported in rebates in the glazing bars and in a rebate of the gutter section.

The invention also relates to a method for constructing the above greenhouse.

It is noted that in practice the term "greenhouse" is generally understood to mean a hothouse suitable for cultivating vegetables, fruit or flowers and the like.

Such a greenhouse is generally known and is described in particular in Dutch patent publication No. 89.02603 (P.L.J. Bom Beheer B.V.). The greenhouse discussed therein is built up of columns, gutters of tubular cross-section supported by said columns, as well as an inclined roof extending between two gutters, said roof comprising a ridge section, glazing bars and panes. Said gutters and said glazing bars form structural elements that are to bear the weight of the roof and take up wind and snow loads.

A general drawback of the greenhouse of the type as referred to in the introduction, including the greenhouse that is known from the aforesaid Dutch patent publication, is the following. It has become apparent in practice that that breaking panes may lead to perilous situations, both during the installation of the panes (the so-called "glazing") and during use of such a greenhouse: falling, sharp and heavy pane fragments may cause critical or even mortal injury to personnel working in the greenhouse. To reduce said risks to a certain extent, panes of hardened glass are often used, but the risk of pane breakage is not excluded in such a case, with all its adverse consequences. So far a solution to the problem of pane breakage has not been found.

The object of the invention is to obviate the above drawback of the prior art, more particularly to provide a greenhouse in which the risk of pane breakage (during the glazing of and use of the greenhouse) has been reduced to acceptable proportions.

In order to accomplish that object, a greenhouse of the kind referred to in the introduction is according to the invention characterised in that a pressure-distributing element of L-shaped cross-section is provided in the rebate of the gutter section, wherein a first leg of the pressure-distributing element of L-shaped cross-section is accommodated in a longitudinal groove of an end wall of the rebate near its free end, and wherein a longitudinal rib extending downward from a second leg of the pressure-distributing element of L-shaped cross-section is accommodated in a longitudinal groove of a side wall of the rebate near its free end. The pressure-distributing element functions as a supporting surface for the pane so as to locally distribute the weight thereof in such a manner that no point loads will occur in the pane at that location, not only during installation of the panes but also, for example, when the panes are being cleaned manually or mechanically after some time. Extensive tests have shown that the risk of pane breakage has thus been virtually excluded, as a result of which it has in particular become readily possible to insure the present greenhouse at low cost. The pressure-distributing element furthermore prevents the panes from being "sucked up" by heavy winds. In the unloaded condition, i.e. when the pressure-distributing element is not loaded for pressure, the pane can be easily installed between the legs of the pressure-distributing element with some play, whereas in the loaded condition (i.e. in the situation in which the pressure-distributing element is loaded for pressure), the pane is firmly clamped between the legs of the pressure-distributing element. In the loaded condition, the rib is effectively pressed into the longitudinal groove of the side wall of the rebate by the weight of the pane. Preferably, the second leg of the pressure-distributing element of L-shaped cross-section is provided with a groove at its bottom side, which groove extends along the entire length of said leg and which is located adjacent to the rib so as to increase the flexibility of the rib.

The pressure-distributing element also functions to contribute to an optimum air-tightness of the greenhouse. This reduces the consumption of energy, for example for creating an overpressure in the greenhouse.

The rib preferably extends the entire length of the second leg, whilst the pressure-distributing element forms an inner liner, as it were, of the rebate of the gutter section.

It is noted that the invention is not limited to panes of a hardened glass, but that it also extends to panes of other (transparent) materials, such as common glass, plastic and the like. In the light of the risk of pane breakage it is preferable, however, to use panes of a hardened glass.

A preferred embodiment of a greenhouse according to the invention, the pressure-distributing element is mounted in the rebate with a snap fit.

In another preferred embodiment of a greenhouse according to the invention, the rib extends obliquely downward from the second leg of the pressure-distributing element of L-shaped cross-section.

In another preferred embodiment of a greenhouse according to the invention, the second leg of the pressure-distributing element of L-shaped cross-section extends beyond the rib and up to a free end of the side wall. More in particular, the second leg extends over a free end of the side wall. This results in an optimal lining of the rebate, in which the pane cannot come into contact with (parts of) the aluminium gutter section.

In another preferred embodiment of a greenhouse according to the invention, the pressure-distributing element is plastically or elastically deformable. In a preferred variant comprising an elastically deformable pressure element, the legs can return to the starting position (i.e. in the case of reuse) after deformation (i.e. after the pressure element has been mounted in the rebate of the gutter section with a snap fit), whilst this is not possible in the case of plastic deformation.

In another preferred embodiment of a greenhouse according to the invention, the first leg of pressure-distributing element of L-shaped cross-section at least substantially abuts against the end wall of the rebate of the gutter section, whilst the second leg at least substantially abuts against the side wall of the rebate of the gutter section. This makes it possible to compensate for an oblique position of the steel structure of the present greenhouse due to temperature changes (blazing during the day, cold during the night) so as to prevent panes from breaking or falling out. In this way a "rattle-free", adequate support of the panes in the rebates is ensured.

In another preferred embodiment of a greenhouse according to the invention, the pressure-distributing element is at least substantially made of a material having thermal insulation properties. The thermally insulating pressure-distributing element prevents the formation of thermal bridges at the location of the rebates. Preferably, the pressure-distributing element is at least substantially made of a material having water-sealing properties. In that case the pressure-distributing element will function as a seal, therefore, to prevent (rain) water and dirt from outside finding their way into the greenhouse past the panes.

In another preferred embodiment of a greenhouse according to the invention, the pressure-distributing element is at least substantially made of a material having sound insulation properties. In this way a low-noise roof construction is obtained.

In another preferred embodiment of a greenhouse according to the invention, the pressure-distributing element is at least substantially made up of a rubber section, which is preferably non-shrinkable.

As already noted before, the invention also relates to a method for constructing a greenhouse according to the invention, wherein a roof extending from at least one gutter section is built up of a ridge section and spaced-apart glazing bars, which glazing bars are connected to an edge of the gutter section near one end and to the ridge section near the other end, and wherein panes are installed between adjacent glazing bars, which panes are supported in rebates of the glazing bars and in a rebate of the gutter section, characterised in that a pressure-distributing element of L-shaped cross-section is mounted in the rebate of the gutter section, wherein a first leg of the pressure-distributing element of L-shaped cross-section is received in a longitudinal groove of an end wall of the rebate near its free end, and wherein a longitudinal rib extending downward from a second leg of the pressure-distributing element of L-shaped cross-section is received in a longitudinal groove of a side wall of the rebate near its free end.

European patent publication no. 1 915 900 of the same Applicant discloses a greenhouse comprising at least one gutter section and a roof extending from said gutter section, which roof comprises a ridge section as well as spaced-apart glazing bars, which are connected to an edge of the gutter section near one end and to the ridge section near the other end, whilst panes are mounted between adjacent glazing bars, which panes are supported in rebates in the glazing bars and in a rebate in the gutter section, characterised in that a pressure-distributing element is provided in the rebate in the gutter section, which pressure-distributing element is capable of deformation from an unloaded position, in which a pane can be placed between legs of the pressure-distributing element, to a loaded position, in which the legs of the pressure-distributing element are pressed against the pane.

The invention will now be explained with reference to figures illustrated in a drawing, in which
- figure 1 is a schematic and perspective view of a part of a roof of a greenhouse according to the invention;
- figure 2 is a sectional view of a gutter section along the line II-II in figure 1, in which figures 2A-2E show various mounting steps.

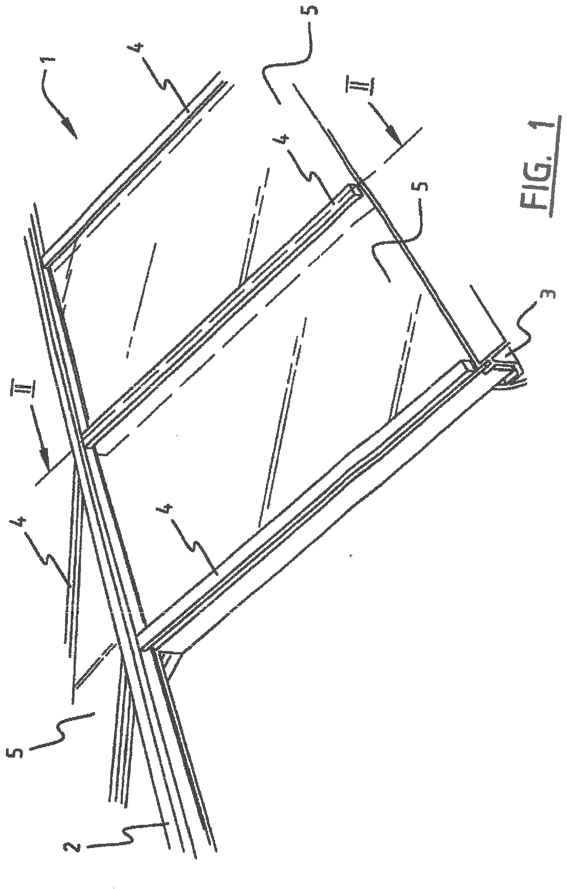

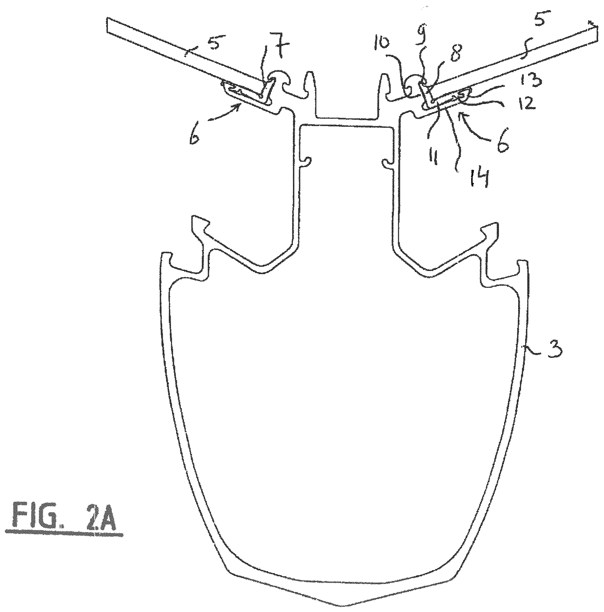

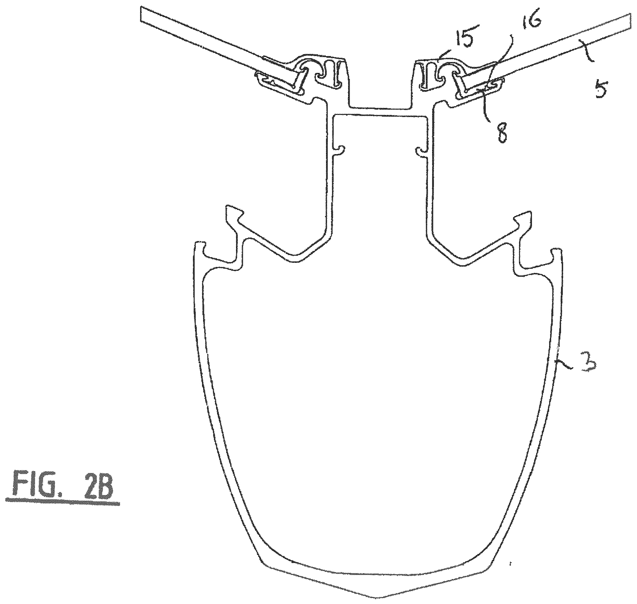

Figure 1 shows an agricultural or horticultural greenhouse, the inclined roof 1 of which is built up of a ridge section 2 extending in the longitudinal direction of the greenhouse and glazing bars 4 mounted on either side of the ridge section 1, which are supported on gutter sections 3. The gutter sections 3 have a tubular cross-section and are in turn supported on columns (not shown). Panes 5 of a hardened glass are mounted between adjacent glazing bars 4, in such a manner that said panes 5 are supported in lateral rebates of the glazing bars 4, between the upper flanges and lower flanges of the ridge section 2, and in lateral rebates 6 of the gutter sections 3 (see figure 2). The upper and lower flanges are connected to a web of the ridge section 2 at a downwardly inclined angle.

Referring to figure 2A, the lateral rebates 6 of each gutter section 3 are lined with a rubber section 7 of L-shaped cross-section. The rubber section 7 primarily functions as a pressure-distributing supporting surface for the panes 5, but it also functions to seal the panes 5 against water and dirt. The rubber section 7 furthermore functions as a thermal insulation element to prevent the formation of thermal bridges across parts of the gutter sections 3. It will be understood that the rubber sections 7 provide a "rattle-free" support for the panes 5 in the lateral rebates 6.

Figure 2A shows the gutter section 3 of figure 1 during a first mounting step.

In the first place, the rubber sections 7 of L-shaped cross-section are laid in the lateral rebates 6 with a snap fit. As a result, a first leg 8 is received in a longitudinal groove 9 of an end wall 10 of the rebate 6 near its free end. Furthermore, a longitudinal rib 12 extending downward from a second leg 11 is received in a longitudinal groove 13 of a side wall 14 of the rebate 6 near its free end.

As shown, the rib 12 extends obliquely downward from the second leg 14.

The second leg 11 extends beyond the rib 12 and over a free end of the side wall 14. In the mounting step shown in figure 2B, a pressure element 15 functioning as a cover for the gutter section 3 is clampingly mounted on the gutter section 3 by means of a snap or clip connection.

As the figure clearly shows, a longitudinal groove 16 extending along the entire length of the second leg is provided so as to increase the flexibility of the rib 12.

It is noted that the invention is not limited to the embodiment shown herein, but that it also extends to other variants that fall within the scope of the appended claims.

## Claims

1. A greenhouse comprising at least one gutter section (3) and a roof (1) extending from said gutter section (3), wherein the roof (1) comprises a ridge section as well as spaced-apart glazing bars (4) which are connected to an edge of the gutter section (3) near one end and to the ridge section (2) near their other end, and wherein panes (5) are provided between adjacent glazing bars (4), which panes are supported in rebates in the glazing bars (4) and in a rebate (6) of the gutter section (3), **characterised in that** a pressure-distributing element (7) of L-shaped cross-section is provided in the rebate (6) of the gutter section, wherein a first leg (8) of the pressure-distributing element (7) of L-shaped
cross-section is accommodated in a longitudinal groove (9) of an end wall (10) of the rebate (6) near its free end, and wherein a longitudinal rib (12) extending downward from a second leg (11) of the pressure-distributing element (7) of L-shaped cross-section is accommodated in a longitudinal groove (13) of a side wall of the rebate near its free end.

2. A greenhouse according to claim 1, wherein the pressure-distributing element (7) is mounted in the rebate (6) with a snap fit.

3. A greenhouse according to claim 1 or 2, wherein the rib (12) extends obliquely downward from the second leg (11) of the pressure-distributing element (7) of L-shaped cross-section.

4. A greenhouse according to claim 1, 2 or 3, wherein the second leg (11) of the pressure-distributing element (7) of L-shaped cross-section extends beyond the rib (12) and up to a free end of the side wall (14).

5. A greenhouse according to claim 4, wherein the second leg (11) of the pressure-distributing element (7) of L-shaped cross-section extends beyond the rib (12) and over a free end of the side wall (14).

6. A greenhouse according to any one of the preceding claims 1-5, wherein the pressure-distributing element (7) is elastically deformable.

7. A greenhouse according to any one of the preceding claims 1-5, wherein the pressure-distributing element (7) is plastically deformable.

8. A greenhouse according to any one of the preceding claims 1-7, wherein the first leg (8) of the pressure-distributing element (7) of L-shaped cross-section at least substantially abuts against the end wall (10) of the rebate (6) of the gutter section (3), and wherein the second leg (11) thereof at least substantially abuts against the side wall (14) of the rebate (6) of the gutter section (3).

9. A greenhouse according to any one of the preceding claims 1-8, wherein the pressure-distributing element (7) is at least substantially made of a material having thermal insulation properties.

10. A greenhouse according to any one of the preceding claims 1-9, wherein the pressure-distributing element (7) is at least substantially made of a material having sound insulation properties.

11. A greenhouse according to any one of the preceding claims 1-10, wherein the pressure-distributing element (7) is at least substantially made of a material having water-sealing properties.

12. A greenhouse according to any one of the preceding claims 1-11, wherein the pressure-distributing element (7) is at least substantially made up of a rubber section.

13. A method for constructing a greenhouse according to any one of the preceding claims 1-12, wherein a roof (1) extending from at least one gutter section (3) is built up of a ridge section (2) and spaced-apart glazing bars (4), which glazing bars (4) are connected to an edge of the gutter section (3) near one end and to the ridge section (2) near the other end, and wherein panes (5) are installed between adjacent glazing bars (4), which panes are supported in rebates of the glazing bars (4) and in a rebate (6) of the gutter section (3), **characterised in that** a pressure-distributing element (7) of L-shaped cross-section is mounted in the rebate (6) of the gutter section (3), wherein a first leg (8) of the pressure-distributing element (7) of L-shaped cross-section is received in a longitudinal groove (9) of an end wall (10) of the rebate (6) near its free end, and wherein a longitudinal rib (12) extending downward from a second leg (11) of the pressure-distributing element (7) of L-shaped cross-section is received in a longitudinal groove (13) of a side wall (14) of the rebate (6) near its free end.

## Patentansprüche

1. Gewächshaus, welches zumindest einen Dachrinnenabschnitt (3) und ein Dach (1) umfasst, welches sich von dem Dachrinnenabschnitt (3) erstreckt, wobei das Dach (1) einen Firstabschnitt sowie beanstandete Fenstersprossen (4) umfasst, welche mit einer Kante des Dachrinnenabschnitts (3) nahe einem Ende und mit dem Firstabschnitt (2) nahe ihrem anderen Ende verbunden sind, und wobei Fensterscheiben (5) zwischen benachbarten Fenstersprossen (4) vorgesehen sind, wobei die Fensterscheiben in Falzen in den Fenstersprossen (4) gelagert sind und in einer Falz (6) des Dachrinnenabschnitts (3), **dadurch gekennzeichnet, dass** ein druckverteilendes Element (7) mit L-förmigem Querschnitt in der Falz (6) des Dachrinnenabschnitts vorgesehen ist, wobei ein erstes Bein (8) des druckverteilenden Elements (7) mit L-förmigem Querschnitt in einer longitudinalen Ausnehmung (9) einer Endwand (10) von der Falz (6) nahe seinem freien Ende untergebracht ist, und wobei eine longitudinale Rippe (12), welche sich von einem zweiten Bein (11) des druckverteilenden Elements (7) mit L-förmigem Querschnitt nach unten erstreckt, in einer longitudinalen Ausnehmung (13) von einer Seitenwand von der Falz nahe seinem zweiten freien Ende untergebracht ist.

2. Gewächshaus gemäß Anspruch 1, wobei das druckverteilende Element (7) in der Falz (6) eingeschnappt montiert ist.

3. Gewächshaus gemäß Anspruch 1 oder 2, wobei sich die Rippe (12) schräg nach unten von dem zweiten Bein (11) des druckverteilenden Elements (7) mit L-förmigem Querschnitt erstreckt.

4. Gewächshaus gemäß Anspruch 1, 2 oder 3, wobei sich das zweite Bein (11) des druckverteilenden Elements (7) mit L-förmigem Querschnitt bis hinter die Rippe (12) erstreckt und bis zu einem freien Ende der Seitenwand (14).

5. Gewächshaus gemäß Anspruch 4, wobei sich das zweite Bein (11) des druckverteilenden Elements (7) mit L-förmigem Querschnitt bis hinter die Rippe (12) und über ein freies Ende der Seitenwand (14) erstreckt.

6. Gewächshaus gemäß irgendeinem der vorhergehenden Ansprüche 1 - 5, wobei das druckverteilende Element (7) elastisch deformierbar ist.

7. Gewächshaus gemäß irgendeinem der vorhergehenden Ansprüche 1 - 5, wobei das druckverteilende Element (7) plastisch deformierbar ist.

8. Gewächshaus gemäß irgendeinem der vorhergehenden Ansprüche 1 - 7, wobei das erste Bein (8) des druckverteilenden Elements (7) mit L-förmigem Querschnitt zumindest im Wesentlichen gegen die Endwand (10) von der Falz (6) des Dachrinnenabschnitts (3) anschlägt, und wobei das zweite Bein (11) davon zumindest im Wesentlichen gegen die Seitenwand (14) von der Falz (6) des Dachrinnenabschnitts (3) anschlägt.

9. Gewächshaus gemäß irgendeinem der vorhergehenden Ansprüche 1 - 8, wobei das druckverteilende Element (7) zumindest im Wesentlichen aus einem Material hergestellt ist, welches thermisch isolierende Eigenschaften aufweist.

10. Gewächshaus gemäß irgendeinem der vorhergehenden Ansprüche 1 - 9, wobei das druckverteilende Element (7) zumindest im Wesentlichen aus einem Material hergestellt ist, welches schallisolierende Eigenschaften aufweist.

11. Gewächshaus gemäß irgendeinem der vorhergehenden Ansprüche 1 - 10, wobei das druckverteilende Element (7) zumindest im Wesentlichen aus einem Material hergestellt ist, welches wasserabdichtende Eigenschaften aufweist.

12. Gewächshaus gemäß irgendeinem der vorhergehenden Ansprüche 1 - 11, wobei das druckverteilende Element (7) zumindest im Wesentlichen aus einem Gummiabschnitt aufgebaut ist.

13. Verfahren zum Konstruieren eines Gewächshauses gemäß irgendeinen der vorhergehenden Ansprüche 1 - 12, wobei ein Dach (1), welches sich von zumindest einem Dachrinnenabschnitt (3) erstreckt, aufgebaut wird von einem Firstabschnitt (2) und beanstandeten Fenstersprossen (4), wobei die Fenstersprossen (4) mit einer Kante des Dachrinnenabschnitts (3) nahe einem Ende und mit dem Firstabschnitt (2) nahe dem anderen Ende verbunden sind, und wobei Fensterscheiben (5) zwischen benachbarten Fenstersprossen (4) installiert sind, wobei die Fensterscheiben in Falzen von den Fenstersprossen (4) und in einer Falz (6) von dem Dachrinnenabschnitt (3) gelagert sind, **dadurch gekennzeichnet, dass** ein druckverteilendes Element (7) mit L-förmigem Querschnitt in der Falz (6) von dem Dachrinnenabschnitt (3) montiert ist, wobei ein erstes Bein (8) des druckverteilenden Elements (7) mit L-förmigem Querschnitt in einer longitudinalen Ausnehmung (9) von einer Endwand (10) von der Falz (6) nahe seinem freien Ende aufgenommen wird, und wobei eine longitudinale Rippe (12), welche sich von einem zweiten Bein (11) des druckverteilenden Elements (7) mit L-förmigem Querschnitt erstreckt, in einer longitudinalen Ausnehmung (13) von einer Seitenwand (14) von der Falz (6) nahe seinem freien Ende aufgenommen wird.

## Revendications

1. Serre comprenant au moins une section de gouttière (3) et un toit (1) s'étendant depuis ladite section de gouttière (3), dans laquelle le toit (1) comprend une section d'arête ainsi que des profilés de vitrage espacés (4) qui sont connectés à un bord de la section de gouttière (3) près d'une extrémité et à la section d'arête (2) près de leur autre extrémité, et dans laquelle des carreaux (5) sont fournis entre des profilés de vitrage adjacents (4), lesquels carreaux sont supportés dans des râblures dans les profilés de vitrage (4) et dans une râblure (6) de la section de gouttière (3), **caractérisée en ce qu'**un élément de distribution de pression (7) à section transversale en L est fourni dans la râblure (6) de la section de gouttière, dans laquelle une première patte (8) de l'élément de distribution de pression (7) à section transversale en L est logée dans une rainure longitudinale (9) d'une paroi d'extrémité (10) de la râblure (6) près de son extrémité libre, et dans laquelle une nervure longitudinale (12) s'étendant vers le bas depuis une seconde patte (11) de l'élément de distribution de pression (7) à section transversale en L est logée dans une rainure longitudinale (13) d'une paroi latérale de la râblure près de son extrémité libre.

2. Serre selon la revendication 1, dans laquelle l'élément de distribution de pression (7) est monté dans la râblure (6) avec un emboîtement par pression.

3. Serre selon la revendication 1 ou 2, dans laquelle la nervure (12) s'étend obliquement vers le bas depuis la seconde patte (11) de l'élément de distribution de pression (7) à section transversale en L.

4. Serre selon la revendication 1, 2 ou 3, dans laquelle la seconde patte (11) de l'élément de distribution de pression (7) à section transversale en L s'étend au-delà de la nervure (12) et jusqu'à une extrémité libre de la paroi latérale (14).

5. Serre selon la revendication 4, dans laquelle la seconde patte (11) de l'élément de distribution de pression (7) à section transversale en L s'étend au-delà de la nervure (12) et sur une extrémité libre de la paroi latérale (14).

6. Serre selon l'une quelconque des revendications 1 à 5 précédentes, dans laquelle l'élément de distribution de pression (7) est déformable élastiquement.

7. Serre selon l'une quelconque des revendications 1 à 5 précédentes, dans laquelle l'élément de distribution de pression (7) est déformable plastiquement.

8. Serre selon l'une quelconque des revendications 1 à 7 précédentes, dans laquelle la première patte (8) de l'élément de distribution de pression (7) à section transversale en L vient au moins sensiblement en butée contre la paroi d'extrémité (10) de la râblure (6) de la section de gouttière (3), et dans laquelle la seconde patte (11) de celui-ci vient au moins sensiblement en butée contre la paroi latérale (14) de la râblure (6) de la section de gouttière (3).

9. Serre selon l'une quelconque des revendications 1 à 8 précédentes, dans laquelle l'élément de distribution de pression (7) est au moins sensiblement composé d'un matériau ayant des propriétés d'isolation thermique.

10. Serre selon l'une quelconque des revendications 1 à 9 précédentes, dans laquelle l'élément de distribution de pression (7) est au moins sensiblement composé d'un matériau ayant des propriétés d'isolation phonique.

11. Serre selon l'une quelconque des revendications 1 à 10 précédentes, dans laquelle l'élément de distribution de pression (7) est au moins sensiblement composé d'un matériau ayant des propriétés d'étanchéité à l'eau.

12. Serre selon l'une quelconque des revendications 1 à 11 précédentes, dans lequel l'élément de distribution de pression (7) est au moins sensiblement constitué d'une section de caoutchouc.

13. Procédé pour construire une serre selon l'une quelconque des revendications 1 à 12 précédentes, dans lequel un toit (1) s'étendant depuis au moins une section de gouttière (3) est construit à partir d'une section d'arête (2) et de profilés de vitrage espacés (4), lesquels profilés de vitrage (4) sont connectés à un bord de la section de gouttière (3) près d'une extrémité et à la section d'arête (2) près de l'autre extrémité, et dans lequel des carreaux (5) sont installés entre des profilés de vitrage adjacents (4), lesquels carreaux sont supportés dans des râblures des profilés de vitrage (4) et dans une râblure (6) de la section de gouttière (3), **caractérisé en ce qu'**un élément de distribution de pression (7) à section transversale en L est monté dans la râblure (6) de la section de gouttière (3), dans lequel une première patte (8) de l'élément de distribution de pression (7) à section transversale en L est reçue dans une rainure longitudinale (9) d'une paroi d'extrémité (10) de la râblure (6) près de son extrémité libre, et dans lequel une nervure longitudinale (12) s'étendant vers le bas depuis une seconde patte (11) de l'élément de distribution de pression (7) à section transversale en L est reçue dans une rainure longitudinale (13) d'une paroi latérale (14) de la râblure (6) près de son extrémité libre.
